(19) Europäisches Patentamt

European Patent Office

Office européen des brevets

(11) **EP 1 457 722 B1**

(12) **EUROPÄISCHE PATENTSCHRIFT**

(45) Veröffentlichungstag und Bekanntmachung des Hinweises auf die Patenterteilung:
**02.08.2006 Patentblatt 2006/31**

(51) Int Cl.:
***F16K 31/06*** *(2006.01)*

(21) Anmeldenummer: **04002868.0**

(22) Anmeldetag: **10.02.2004**

(54) **Anbausatz für ein Fahrzeug-Luftfedersystem mit einem zuschaltbaren Zusatz-Luftfedervolumen**

Mounting device for a pneumatic vehicle suspension system with auxiliary pneumatic accumulator

Système de montage d'une suspension à air pour véhicules avec accumulateur auxiliaire

(84) Benannte Vertragsstaaten:
**AT BE BG CH CY CZ DE DK EE ES FI FR GB GR HU IE IT LI LU MC NL PT RO SE SI SK TR**

(30) Priorität: **12.02.2003 DE 20302274 U**

(43) Veröffentlichungstag der Anmeldung:
**15.09.2004 Patentblatt 2004/38**

(73) Patentinhaber: **Voss Automotive GmbH**
**51688 Wipperfürth (DE)**

(72) Erfinder: **Borgmeier, Olav**
**42499 Hückeswagen (DE)**

(74) Vertreter: **Patentanwälte**
**Dr. Solf & Zapf**
**Postfach 13 01 13**
**42028 Wuppertal (DE)**

(56) Entgegenhaltungen:
**US-A- 3 134 404**     **US-A- 6 144 907**
**US-B1- 6 282 730**     **US-B1- 6 367 773**

EP 1 457 722 B1

**Beschreibung**

Die vorliegende Erfindung betrifft einen neuartigen Anbausatz für ein Fahrzeug-Luftfedersystem, bestehend aus einem Zusatz-Luftfedervolumen mit einer an ein Fahrzeug-Haupt-Luftfedervolumen anschließbaren Verbindungsleitung und einer Schalteinrichtung zum wahlweisen Zu- oder Abschalten des Zusatz-Luftfedervolumens.

Aus der EP 0 193 851 A2/B1 und der parallelen US 4 712 775 ist ein Stoßdämpfer bzw. Luftfederbein bekannt, welches zusätzlich zu einer Hauptluftkammer eine Hilfsluftkammer aufweist. Zwischen diesen beiden im oberen Endbereich des Dämpfers integriert angeordneten Luftkammern ist zudem ein Steuerventil integriert, welches mechanisch durch ein Betätigungsorgan (Aktuator) betätigbar ist, um die Hilfsluftkammer mit der Hauptluftkammer zu verbinden oder von dieser abzutrennen. Eine solche integrierte Ausführung führt zu einer großen Bauform, was in heutigen Fahrzeugen häufig zu Platzproblemen führt. Außerdem ist das Steuerventil aufgrund von Dichtungsmitteln und aufgrund des separaten Betätigungsorgans aufwändig.

Einen sehr ähnlichen Stand der Technik beschreiben auch die US 4 660 810 und die GB 2 134 625.

Die DE 100 17 030 A1 beschreibt ein spezielles Magnetventil, bei dem in Endlagen eines Magnetankers wirksame Dämpfungsmittel vorgesehen sind, die ein hartes Anschlagen des Ankers und der korrespondierenden Dichtungsmittel aneinander verhindern sollen. Dadurch soll es möglich sein, in Luftfedersystemen von PKW's ein Komfortvolumen in Abhängigkeit von der Fahrdynamik zum Erreichen einer härteren Federrate weitestgehend geräuschlos abzuschalten. Dieses Ventil ist jedoch ebenfalls sehr kompliziert und aufwändig aufgebaut.

Das Dokument US 6 367 773 B1 beschreibt ein Drosselventil für einen Verbrennungsmotor mit einer Drosselklappe, die in einer Schließstellung noch einen minimalen Durchfluss offenlässt. Eine Anwendung zum Schalten eines Zusatz-Luftfedervolumens ist nicht beschrieben.

Die US 6 144 907 A behandelt ebenfalls keine Luftfeder mit zuschaltbarem Zusatzvolumen, sondern eine hydropneumatische Federung, wobei ein Hydraulikspeicher über ein elektromagnetisches Umschaltventil entweder direkt oder über eine Drossel mit Hydraulikzylindern verbindbar ist.

Der vorliegenden Erfindung liegt die Aufgabe zugrunde, eine Möglichkeit zu schaffen, für ein Fahrzeug-Luftfedersystem ein mit konstruktiv einfachen und kostengünstigen Mitteln wahlweise zu - oder abschaltbares Zusatz-Luftfedervolumen bereitzustellen, wobei auch der Raumbedarf im Fahrzeug gering bzw. leicht an unterschiedliche Umgebungsbedingungen anpaßbar sein soll.

Erfindungsgemäß wird dies durch einen neuartigen Anbausatz gemäß dem Anspruch 1 erreicht. Vorteilhafte Weiterbildungen der Erfindung sind in den abhängigen Ansprüchen enthalten.

Erfindungsgemäß ist somit das Zusatz-Luftfedervolumen vom Dämpfer bzw. Federbein und dessen Haupt-Luftfedervolumen räumlich getrennt und über eine Verbindungsleitung anschließbar. Dadurch können die Komponenten des erfindungsgemäßen Anbausatzes vorteilhafterweise nahezu beliebig dort plaziert werden, wo im Fahrzeug ausreichender Raum zur Verfügung steht. Hierbei ist zudem die besondere Ausgestaltung der Schalteinrichtung von erfindungswesentlicher Bedeutung. So wird in der Öffnungsstellung nahezu der vollständige, maximale

Durchlass-Querschnitt der Verbindungsleitung für eine Durchströmung in beiden Richtungen freigegeben. Hierbei ist der Durchlass-Querschnitt in der Öffnungsstellung derart groß gewählt, dass in einem in der Praxis zu erwartenden Frequenzbereich einer Federungs-Erregerfrequenz ein sogenannter Helmholtz-Effekt vermieden wird. Dies bedeutet, dass es in der Öffnungsstellung in der Praxis nicht zu einem "dynamischen Stau" in der Verbindungsleitung kommen kann. Im Gegensatz dazu wird die Verbindungsleitung in der Sperrstellung bewußt nicht vollständig dicht geschlossen, sondern nur bis zu einem bestimmten Restöffnungsquerschnitt. Damit beruht die Erfindung auf der Erkenntnis, dass schon bei einem bestimmten reduzierten Durchlass-Querschnitt bei bestimmten Anregungsspektren des Fahrwerks, d. h. in einem bestimmten Bereich der Erregerfrequenz (Frequenz der Federungsbewegungen), das Zusatz-Luftfedervolumen quasi abgeschaltet wird. Grund hierfür ist eine schwingende Luftsäule in der Verbindungsleitung, wobei oberhalb der Eigenfrequenz der schwingenden Luftsäule durch die Trägheit der Masse der Luft das Zusatzvolumen trotz eines bestimmten Restöffnungsquerschnittes praktisch abgesperrt wird. Dies wird in der Fachwelt als Helmholtz-Effekt bezeichnet. Der in der Sperrstellung verbleibende Restöffnungsquerschnitt ist daher einerseits so klein ausgelegt, dass bei in der Praxis auftretenden Schwingungen durch den Helmholtz-Effekt ein Quasi-Verschluss erreicht wird; andererseits ist der Restöffnungsquerschnitt aber so groß, dass in einem statischen oder quasi-statischen Betriebszustand der Luftfederung ein vollständiger Druckausgleich zwischen den Haupt- und Zusatz-Luftfedervolumina über die Schalteinrichtung stattfindet.

Durch die erfindungsgemäßen Maßnahmen kann vorteilhafterweise die Schalteinrichtung sehr einfach aufgebaut sein, vor allem deshalb, weil für die Sperrstellung keinerlei Dichtungsmittel erforderlich sind. Daher ist in einer bevorzugten Ausführung die Schalteinrichtung von einer in der Verbindungsleitung angeordneten, scheibenförmigen Drosselklappe gebildet, die um eine quer zur Verbindungsleitung verlaufende Achse derart drehbar gelagert ist, dass sie mit ihrer Scheibenfläche in der öffnungsstellung in Längsrichtung der Verbindungsleitung und in der Sperrstellung in Querrichtung ausgerichtet ist. Hierbei ist der Restöffnungsquerschnitt in der Sperrstellung durch einen die Drosselklappe umschließenden Umfangsspalt zum Innenumfang der Verbindungsleitung hin gebildet. Dadurch ist die Drosselklappe vorteilhafterweise mit einer äußerst geringen Betätigungskraft bewegbar, weil sie innerhalb der Verbindungsleitung nahezu reibungsfrei gelagert sein kann. In weiterer bevorzugter Ausgestaltung kann daher vorgesehen sein, dass die Drosselklappe mechanisch verbindungs- und berührungslos durch mindestens ein Magnetfeld einer außerhalb der Verbindungsleitung angeordneten Magnetanordnung betätigbar ist. Dadurch erübrigen sich auch mechanische, die Verbindungsleitung durchgreifende Betätigungsverbindungen und zugehörige Dichtungen.

Anhand der Zeichnungen soll die Erfindung beispielhaft noch genauer erläutert werden. Dabei zeigen:

Fig. 1     ein stark schematisches Prinzipbild eines Luftfedersystems zur Erläuterung seiner Wirkungsweise,

Fig. 2     ein mechanisches Ersatzschaltbild zu Fig. 1,

Fig. 3     Diagramme zur Erläuterung des sogenannten Helmholtz-Effektes,

Fig. 4     eine Perspektivansicht eines Teils einer Verbindungsleitung als Bestandteil eines erfindungsgemäßen Anbausatzes mit einer ersten Ausführung einer Schalteinrichtung,

Fig. 5     einen Teil-Längsschnitt zu Fig. 4,

Fig. 6     einen Teil-Längsschnitt in einer anderen, zum Schnitt gemäß Fig. 5 senkrechten Schnittebene und in einer Ausführungsvariante,

Fig. 7 bis 10     vereinfachte Prinzipdarstellungen analog zu Fig. 5 zur Veranschaulichung unterschiedlicher Schaltstellungen der Schalteinrichtung,

Fig. 11     eine teilgeschnittene Perspektivansicht einer Ausführungsvariante der Schalteinrichtung,

Fig. 12     eine perspektivische Explosionsdarstellung zur Ausführung nach Fig. 11,

Fig. 13     eine Explosions-Seitenansicht der Einzelteile zur Ausführung nach Fig. 11 und 12,

Fig. 14 u. 15     weitere Prinzipdarstellungen analog zu Fig. 7 bis 10 in einer weiteren Ausführungsvariante,

Fig. 16     eine Perspektivdarstellung eines von zwei Buchsen-Teilen einer Haltebuchse der Schalteinrichtung,

Fig. 17     eine vergrößerte Stimansicht auf das Buchsen-Teil gemäß Fig. 16,

Fig. 18     einen Diagonalschnitt in der Ebene A - A gemäß Fig. 17,

Fig. 19     einen Diagonalschnitt in der Ebene B - B gemäß Fig. 17 mit zusätzlicher Darstellung des zweiten Buchsen-Teils zur Erläuterung der Montage,

Fig.20 bis 22     weitere Ausführungsvarianten in Darstellungen analog zu Fig. 7 bis 10 bzw. zu Fig. 14 und 15.

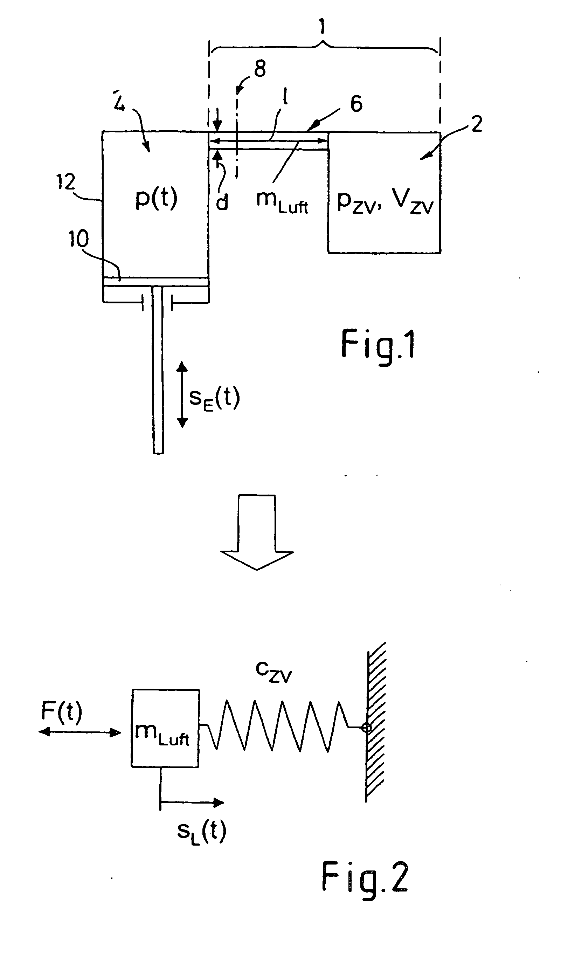

Wie sich zunächst aus Fig. 1 ergibt, besteht ein erfindungsgemäßer Anbausatz 1 aus einem Zusatz-Luftfedervolumen 2 mit einer an ein Haupt-Luftfedervolumen 4 anschließbaren Verbindungsleitung 6, in der eine in Fig. 1 nur durch eine Strichpunktlinie angedeutete Schalteinrichtung 8 angeordnet ist. Mittels dieser Schalteinrichtung 8 kann das Zusatzvolumen 2 wahlweise mit dem Hauptvolumen 4 verbunden oder von diesem abgetrennt werden, um die effektive Federkennlinie in Abhängigkeit von den gewünschten Fahreigenschaften des Fahrzeugs zu verändern. Die Verbindungsleitung 6 ist über einen geeigneten, nicht gesondert dargestellten Leitungsverbinder, insbesondere eine Steckverbindung, mit dem Haupt-Luftfedervolumen 4 luftdruckdicht verbindbar. Dies kann analog auch für die Verbindung der Verbindungsleitung 6 mit dem Zusatz-Luftfedervolumen 2 gelten.

Das Haupt-Luftvolumen 4 ist von einem Federkolben 10 beaufschlagt, der sich entsprechend den Federungsbewegungen eines Rades in einem Zylinder 12 bewegt. Diese zeitabhängige Erregerbewegung ist in Fig. 1 mit $s_E$ (t) bezeichnet. Dadurch verändern sich das Volumen und der Druck p (t) innerhalb des Hauptvolumens 4 entsprechend zeitabhängig.

Bei geöffneter Schalteinrichtung 8 bewegt sich das Luftvolumen bzw. die Luftmasse $m_{Luft}$ innerhalb der Verbindungsleitung 6 entsprechend der eingangsseitigen Erregerfrequenz gegen das Volumen $V_{zv}$ bzw. den Druck $p_{zv}$ des Zusatzvolumens 2. Gemäß Fig. 2 wirkt somit die Luftmasse $m_{Luft}$ bei Bewegung $s_L$ (t) gegen die Federkonstante $c_{zv}$

des Zusatzvolumens 4. Mit anderen Worten schwingt die Luftmasse $m_{Luft}$ in der Leitung 6 auf der Luftfeder des Zusatzvolumens $V_{zv}$.

In Abhängigkeit von dem Durchmesser d bzw. dem Querschnitt

$$A_L = \frac{d^2 \cdot \pi}{4}$$

und der Länge l der Verbindungsleitung 6 ergibt sich eine Eigenfrequenz $\omega_0$ (Kreisfrequenz) in der Verbindungsleitung 6, d. h. die sogenannte Helmholtz-Eigenfrequenz $\omega_{eHH}$, nach der folgenden Formel (1):

$$\omega_0 = \omega_{eHH} = \sqrt{\frac{c_{zv}}{m_{Luft}}} = d \cdot \sqrt{\frac{n \cdot \pi \cdot R_{Luft} \cdot T}{4 \cdot V_{zv} \cdot l}}$$

Dazu gelten folgende Beziehungen:

Federkonstante des Zusatzvolumens (Formel (2)):

$$\rho_{Luft} \approx \frac{p_{zv}}{R_{Luft} \cdot T}$$

Masse der Luft in der Verbindungsleitung 6 (Formel (3)):

$$m_{Luft} = \frac{d^2 \cdot \pi}{4} \cdot l \cdot \rho_{Luft}$$

Luftdichte (Formel (4)):

$$c_{zv} = n \cdot A_L{}^2 \cdot \frac{p_{zv}}{V_{zv}}$$

$R_{luft}$ ist die Gaskonstante (etwa 287 J/(kgK)) und T die Temperatur in Kelvin. $V_{zv}$ ist die Größe des Zusatzvolumens 2. n ist der sogenannte Polytropen-Exponent, üblicherweise im Bereich von 1 bis 1,4, der die innere Luftreibung angibt.

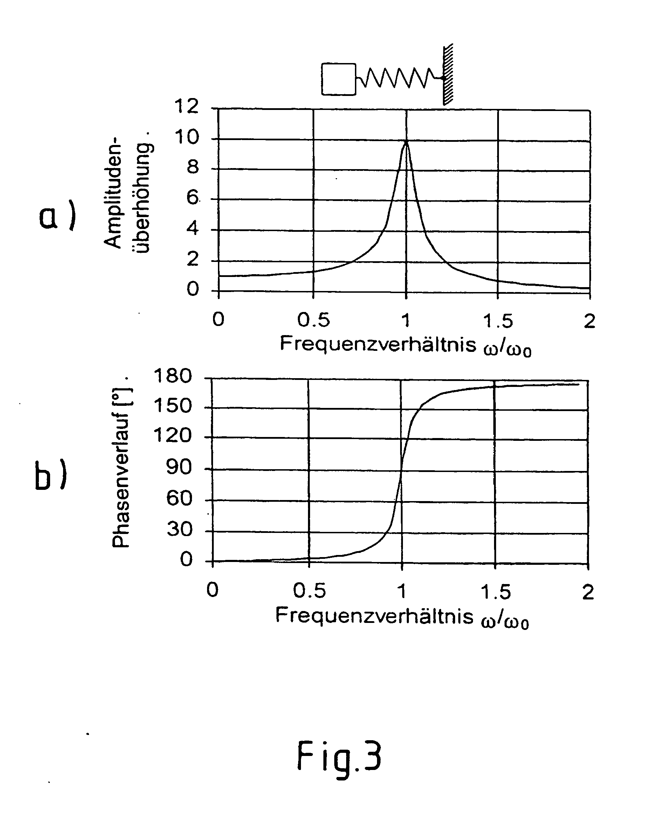

Die Diagramme in Fig. 3 veranschaulichen nun das Verhalten in Abhängigkeit vom Verhältnis der eingangsseitigen Erregerfrequenz $\omega$ zur Eigen- bzw. Helmholtzfrequenz $\omega_0$. Es können folgende Fälle auftreten:

(a) Bei Erregerfrequenz unterhalb der Eigenfrequenz führt eine Amplitudenerhöhung zu einem zusätzlichen "Auspumpen" des Zusatz-Luftfedervolumens 2 (Phasenverschiebung nahe 0°). Dadurch wird die effektive Federsteife im Gesamtsystem gesenkt.

(b) Oberhalb der Eigenfrequenz schwingt die Masse im Gegentakt (Phasenverschiebung nahe 180°), es kommt zu einer zusätzlichen Druckerhöhung im Haupt-Federvolumen 4 und dadurch insgesamt zu einer Erhöhung der Federsteife.

(c) Weit oberhalb der Eigenfrequenz schwingt die Masse nahezu gar nicht mehr, so dass das Zusatz-Luftfedervolumen 2 praktisch abgesperrt ist.

Unter Ausnutzung dieser beschriebenen Effekte ist nun erfindungsgemäß vorgesehen, dass der in der Öffnungsstellung der Schalteinrichtung 8 wirksame maximale Querschnitt der Verbindungsleitung 6 sowie deren Länge I derart ausgelegt sind, dass für einen in der Anwendungspraxis zu erwartenden Bereich der Erregerfrequenz, bei Fahrzeug-Federungen erfahrungsgemäß 0 bis 100 Hz, insbesondere 0 bis maximale 10 bis 12 Hz, die Eigenfrequenz jedenfalls größer ist, entsprechend dem obigen Fall (a). Hierzu folgendes konkretes Ausführungsbeispiel:

Mit d=0,01 m = 1 cm

$V_{zv}$= 0,0015 m$^3$ = 1,5 dm$^3$ (1,5 l)

L=0,5m

T = 293 K

$R_{Luft}$ = 287 J/(kgK)

n = 1,4

ergibt sich nach obiger Formel in (1):

$$\omega_{eHH} = 111\frac{1}{s}$$

$$f_{eHH} = \frac{\omega_{eHH}}{2\pi} = 17.7 Hz$$

Diese Eigenfrequenz liegt somit jedenfalls höher als die zu erwartende Erregerfrequenz.

Im Gegensatz dazu ist für die Sperrstellung der Schalteinrichtung 8 unter gezielter Nutzung des beschriebenen Helmholtz-Effektes erfindungsgemäß vorgesehen, dass durch einen verbleibenden Restöffnungsquerschnitt die Eigenfrequenz soweit vermindert wird, dass der obige Fall (c) auftritt. Dabei ist aber der Restöffnungsquerschnitt so groß, dass in einem statischen oder quasi-statischen, d. h. schwingungsfreien oder nahezu schwingungsfreien Betriebszustand des Luftfedersystems ein vollständiger Druckausgleich zwischen Haupt- und Zusatzvolumen 4, 2 über die Schalteinrichtung 8 erfolgt. In der Praxis liegt beispielsweise der Restöffnungsquerschnitt etwa im Bereich um 3 % des maximalen Querschnittes in der Öffnungsstellung.

In einer vorteilhaften Ausführungsform ist zum Beispiel ein maximaler Leitungsdurchmesser d von 0 bis 200 mm, insbesondere etwa 9 bis 30 mm, vorgesehen. Der maximale Leitungsquerschnitt $A_L$ und der reduzierte Restöffnungsquerschnitt lassen sich nach den oben beschriebenen Bedingungen leicht ermitteln.

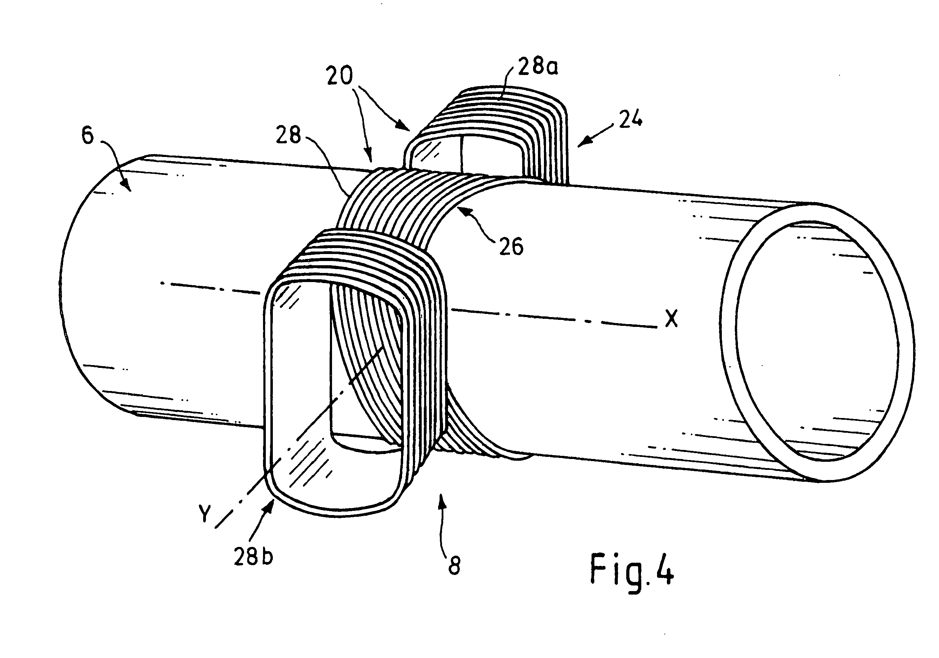

Es sollen nun vorteilhafte Ausführungsbeispiele für die Schalteinrichtung 8 anhand der Fig. 4 bis 13 erläutert werden.

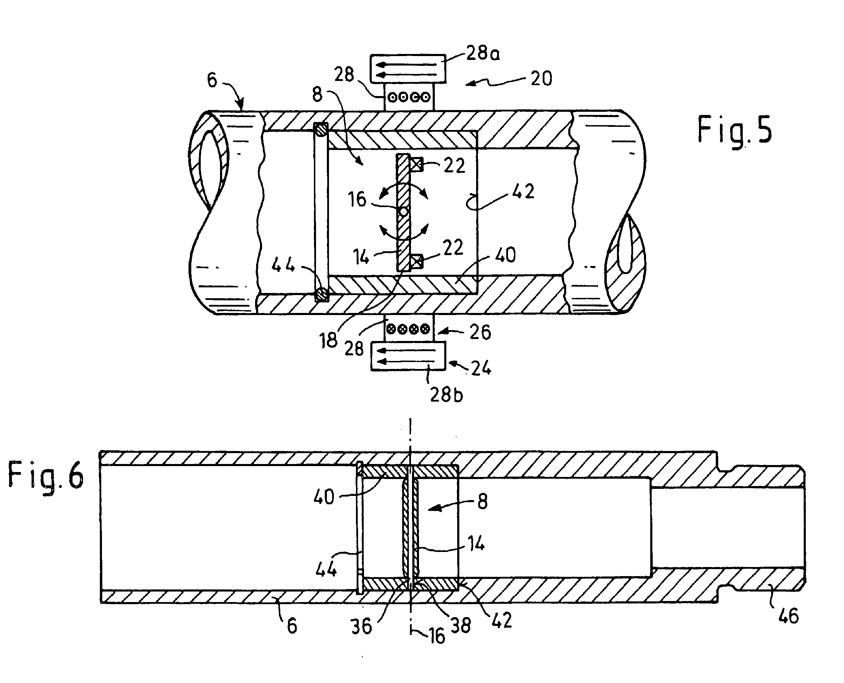

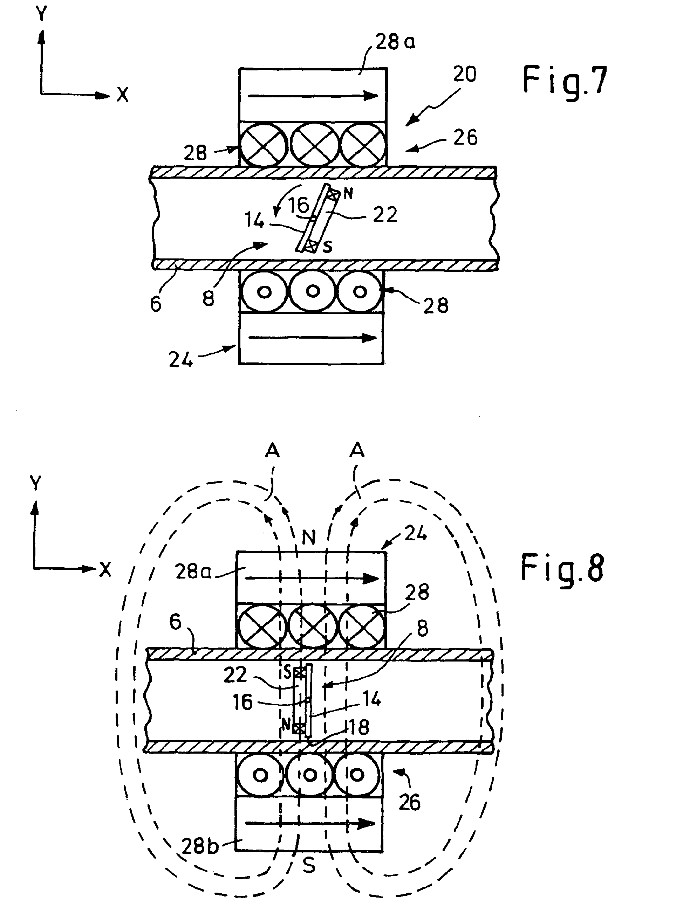

Erfindungsgemäß ist die Schalteinrichtung 8 von einer in der Verbindungsleitung 6 angeordneten, scheibenförmigen Drosselklappe 14 gebildet, die um eine quer zur Verbindungsleitung 6 verlaufende Achse 16 derart drehbar gelagert ist, dass sie mit ihrer Scheibenfläche einerseits in der Öffnungsstellung in Längsrichtung der Verbindungsleitung 6 und andererseits in der Sperrstellung in Querrichtung ausgerichtet ist. Vorteilhafterweise ist die Drosselklappe 14 innerhalb der Verbindungsleitung 6 nahezu reibungsfrei drehbar, da sie in allen Stellungen mit ihrem äußeren Umfangsrand vom inneren Umfang der Verbindungsleitung 6 beabstandet ist. Damit ergibt sich auch in der Sperrstellung ein Restöffnungsquerschnitt durch einen die Drosselklappe 14 umschließenden Umfangsspalt 18, siehe dazu die in Fig. 5 und 8 jeweils dargestellte Sperrstellung. Dieser Umfangsspalt 18 und der daraus resultierende Restöffnungsquerschnitt ist nach den oben erläuterten Kriterien bemessen.

Durch die nahezu reibungsfreie Lagerung der Drosselklappe 14 ist es vorteilhafterweise möglich, die Drosselklappe 14 mechanisch verbindungs- und berührungslos durch mindestens ein Magnetfeld A, B einer außerhalb der Verbindungsleitung 6 angeordneten Magnetanordnung 20 zu betätigen. Dazu ist die Drosselklappe 14 zwei- oder mehrpolig magnetisiert. Die Magnetisierung kann axial, radial oder auf der Fläche sektorförmig ausgeführt sein. Je nach Ausführung kann die Ausrichtung isotrop, anisotrop oder polar orientiert sein. Beispielsweise ist die Drosselklappe 14 derart diametral magnetisiert, dass sie entsprechend dem innerhalb der Verbindungsleitung 6 vorliegenden Verlauf des Magnetfeldes A/B der äußeren Magnetanordnung 20 ausrichtbar ist (nach Art einer Kompaßnadel). Gemäß Fig. 5 und 7 bis 10 kann dazu die Drosselklappe 14 ein entsprechend diametral magnetisiertes und zum Beispiel auf einer Oberfläche befestigtes Magnetelement 22, insbesondere einen Ringmagnet, aufweisen. In bevorzugter Ausgestaltung besteht aber die Drosselklappe 14 selbst aus einem entsprechend diametral magnetisierten Material, und zwar insbesondere aus einem kunststoffgebundenen Permanentmagnet (Kunststoff mit eingebetteten Permanentmagnetpartikeln). Dazu wird auf die Variante gemäß Fig. 6 verwiesen.

Die außen im Bereich der Verbindungsleitung 6 angeordnete Magnetanordnung 20 besteht aus mindestens einem Magnetelement, welches elektromagnetisch als elektrisch steuerbare und/oder räumlich bewegbare Magnetspule oder als räumlich bewegbarer Permanentmagnet ausgebildet ist. Bei mehreren, beispielsweise zwei Magnetelementen ist auch eine beliebig kombinierte Anwendung von Magnetspule (n) und Permanentmagnet (en) möglich.

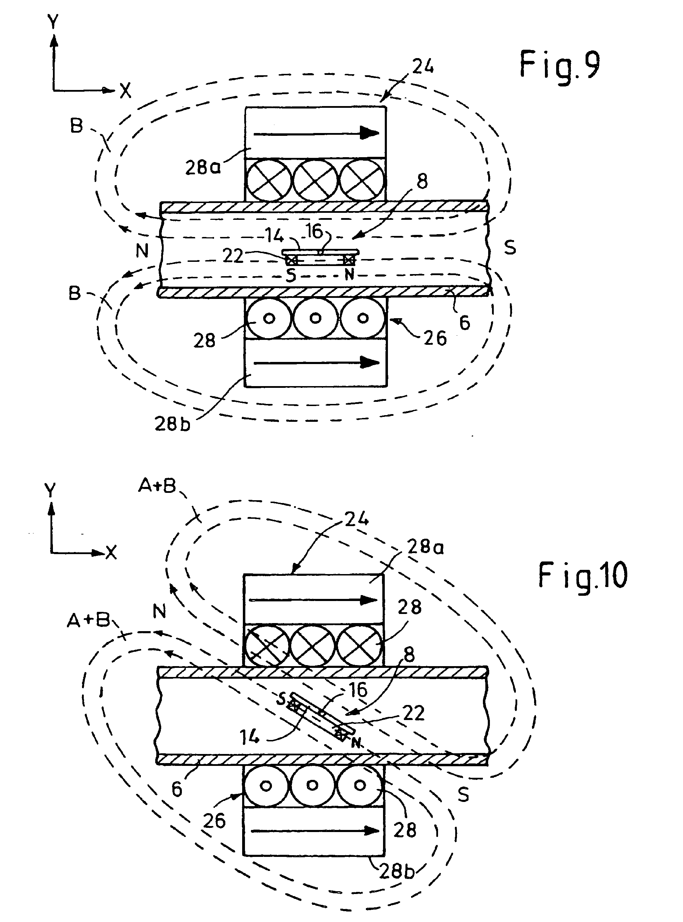

Bei den in Fig. 5 und 7 bis 10 veranschaulichten Ausführungen sind zwei Magnetelemente 24 und 26 vorgesehen. Dabei sind beide Magnetelemente 24 und 26 durch Magnetspulen 28 gebildet. Zur Erzeugung eines ersten, innerhalb der Verbindungsleitung 6 quer dazu (Achsrichtung Y) verlaufenden Magnetfeldes A - siehe Fig. 8 - besteht das erste Magnetelement 24 aus zwei Teilspulen 28a und 28b, die auf diametral gegenüberliegenden Seiten der Verbindungsleitung 6 angeordnet sind, wobei die Spulenachse entsprechend dem Verlauf des Magnetfeldes A quer zur Verbindungsleitung 6 ausgerichtet ist. Das zweite Magnetelement 26 ist als eine die Verbindungsleitung 6 koaxial umschließende Magnetspule 28 ausgebildet, so dass sowohl die Spulenachse, als auch das resultierende Magnetfeld B innerhalb der Verbindungsleitung 6 in Längsrichtung verläuft (Achsrichtung X, siehe Fig. 9). Bei dieser Ausführung ist die Drosselklappe 14 frei um die Achse 16 drehbar, wobei sie gemäß Fig. 8 durch das Magnetfeld A des einen Magnetelementes 24 (Magnetspulen 28a und 28b) in die Sperrstellung und gemäß Fig. 9 durch das Magnetfeld B des anderen Magnetelementes 26 (Magnetspule 28) in die Öffnungsstellung ausrichtbar ist.

Wie in Fig. 10 veranschaulicht ist, kann grundsätzlich auch vorgesehen sein, die Drosselklappe 14 durch Überlagerung der Magnetfelder A und B beider Magnetelemente 24, 26 in beliebige Zwischenstellungen ausrichten zu können. Dazu werden die Magnetspulen 28 und 28a, b durch Steuermittel mit entsprechenden Spannungen versorgt. Dabei ist zu beachten, dass die Magnetfelder A, B derart stark sind, dass die Stellung der Drosselklappe auch bei Durchströmungen weitgehend konstant bleibt. Bei dieser Ausführung wirkt die Drosselklappe 14 nicht nur als Schalteinrichtung, sondern auch als steuerbare Drosselung.

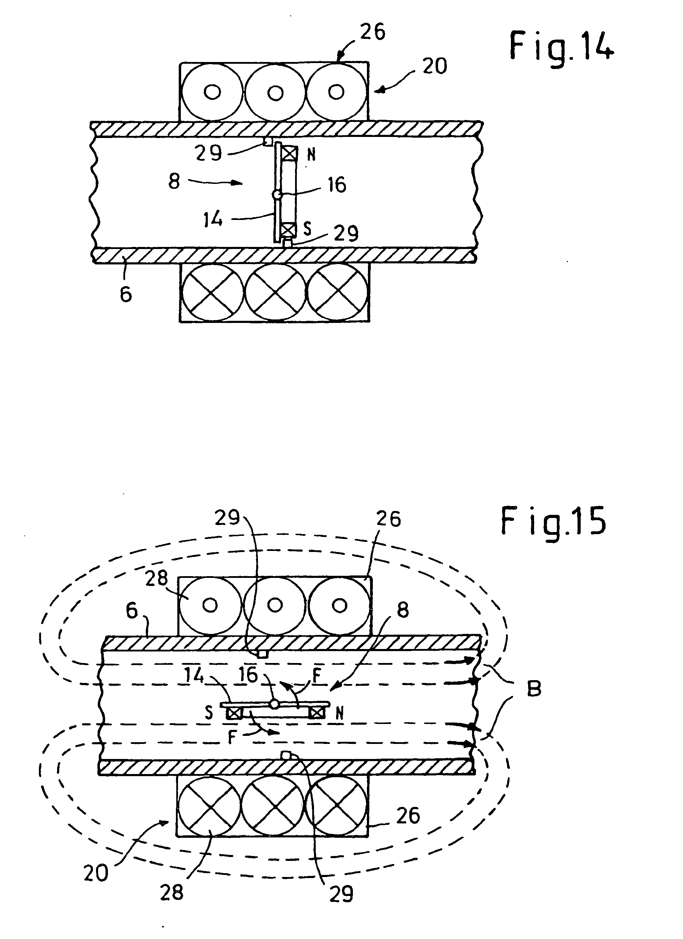

In einer in den Fig. 14 und 15 dargestellten Ausführungsvariante weist die Drosselklappe 14 eine durch Federkraft F bedingte Ruhelage mit mechanischem Endanschlag auf, aus der sie durch nur ein Magnetfeld B eines Magnetelementes 25 der äußeren Magnetanordnung 20 in eine Arbeitslage bringbar ist. Hierbei sind insbesondere die Ruhelage die Schließstellung (Fig. 14) und die Arbeitslage die Öffnungsstellung (Fig. 15). Allerdings ist dies auch ohne Weiteres umgekehrt möglich. Für eine solche Federkraft-Beaufschlagung kann mit Vorteil eine Torsionsfeder (Drehstabfeder) vorgesehen sein, die dann gleichzeitig eine Lagerachse für die Drehlagerung der Drosselklappe 14 bildet. Dabei ist einerseits die Drosselklappe 14 drehfest (drehmomentschlüssig) mit der als diametrale Lagerachse (Achse 16) fungierenden Torsionsfeder verbunden, und andererseits ist die Torsionsfeder endseitig drehfest in der Verbindungsleitung 6 gehalten. Als Endanschlag sind z. B. innerhalb der Verbindungsleitung 6 auf deren Innenumfang radial nach innen vorspringende Anschlagelemente 29 angeordnet.

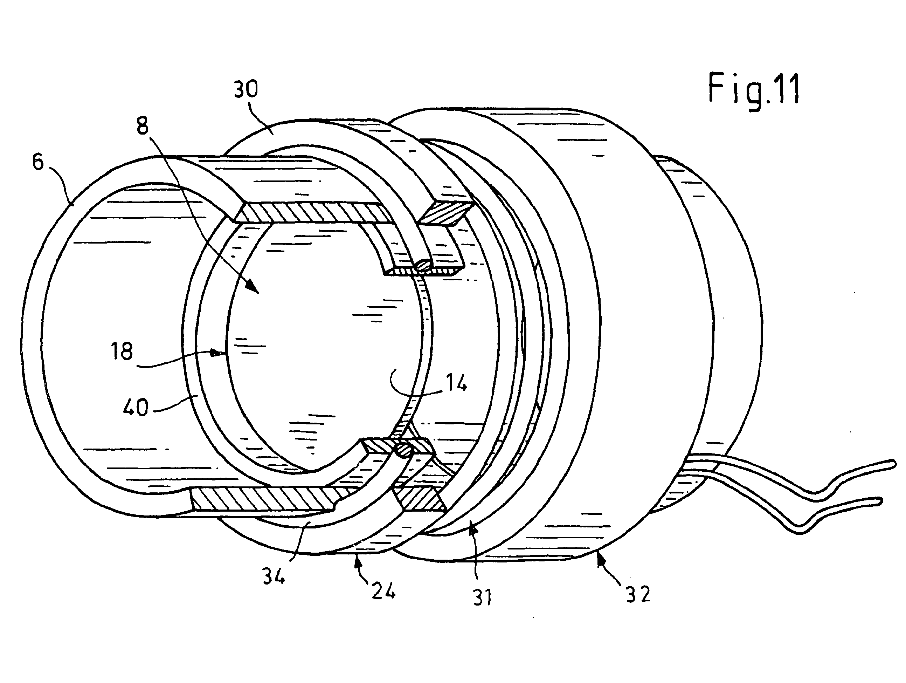

Auch bei der Ausführung gemäß Fig. 11 bis 13 ist nur ein Magnetelement 24 vorgesehen, wobei die Drosselklappe 14 eine federbedingte Sperrstellung aufweist. Das Magnetelement 24 ist von einem Permanentmagnet 30 gebildet, der als anisotroper Ringmagnet die Verbindungsleitung 6 koaxial umschließt, dabei aber axial (in Achsrichtung X) beweglich ist. Diese Bewegung wird durch eine Aktuatorspule 32 gegen die Kraft einer Rückstellfeder 31 bewirkt.

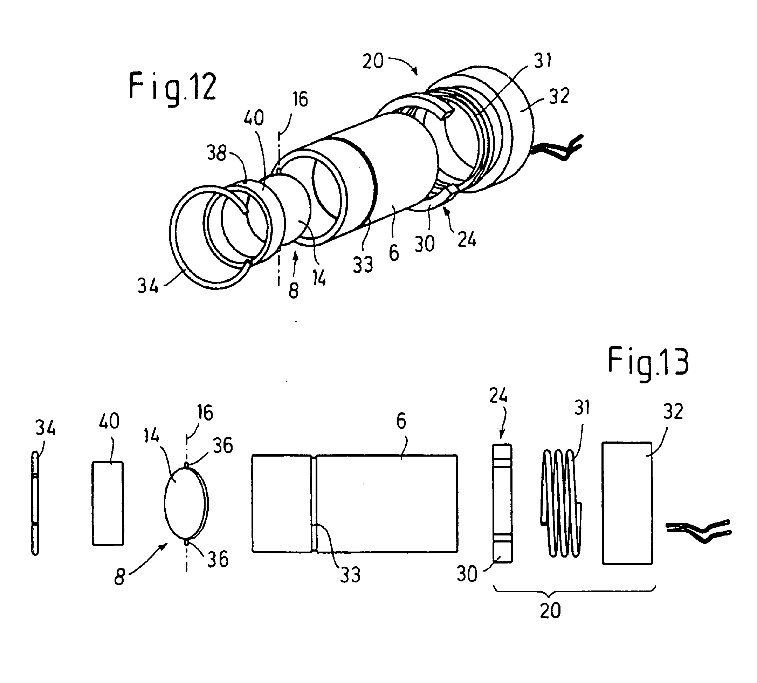

Gemäß Fig. 11 wird die axiale Bewegung des Permanentmagneten 30 zwischen der Aktuatorspule 32 und einem außen auf der Verbindungsleitung 6 in einer Ringnut 33 (siehe Fig. 12 und 13) sitzenden Sicherungsring 34 begrenzt.

Für eine einfache und reibungsarme sowie montagegünstige Dreh-Lagerung der Drosselklappe 14 kann vorgesehen sein, dass die Drosselklappe 14 über diametrale Achsenden 36 innerhalb der Verbindungsleitung 6, und zwar insbesondere in Lageröffnungen 38 einer in die Verbindungsleitung 6 eingesetzten Haltebuchse 40, frei drehbar gelagert oder im Falle der oben erwähnten Torsions-/Drehstabfeder drehfest gehalten ist. Zur Montage wird zunächst die Drosselklappe 14 in die Haltebuchse 40 eingesetzt. Dann wird eine zum Beispiel von einem Metallstift gebildete Achse von außen durch die Lageröffnungen 38 der Haltebuchse 40 und durch eine fluchtende diametral verlaufende Lageröffnung der Drosselklappe 14 gesteckt. Schließlich wird die Haltebuchse 40 zusammen mit der Drosselklappe 14 axial in die Verbindungsleitung 6 eingesetzt und beispielsweise zwischen einer inneren Anlagestufe 42 und einem Sicherungsring 44 fixiert (siehe dazu Fig. 5 und 6). Bei dieser Ausführung ist der beschriebene Umfangsspalt 18 zwischen dem Außenumfang der Drosselklappe 14 und dem Innenumfang der Haltebuchse 40 gebildet.

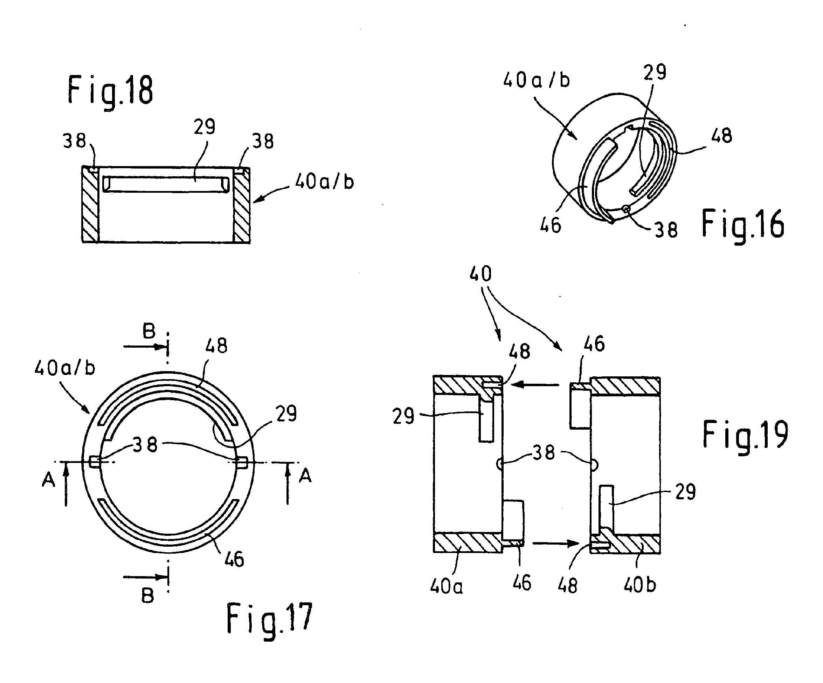

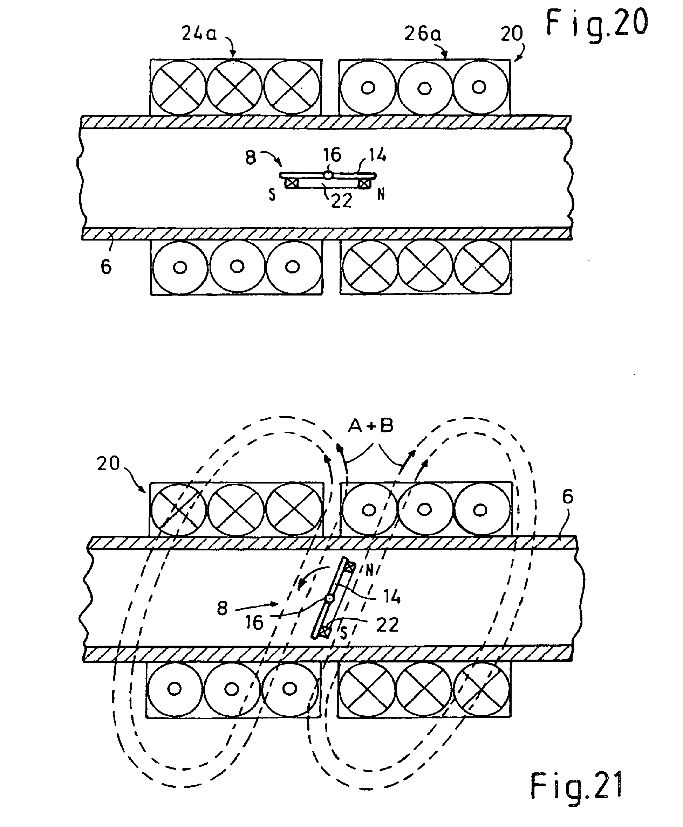

Bei einer weiteren, in den Fig. 16 bis 19 veranschaulichten Ausführung ist die Haltebuchse 40 zur Montage-Vereinfachung in einer - hier beispielhaft radial, d. h. quer zu der Verbindungsleitung 6 durch die Lageröffnungen 38 verlaufenden - Teilungsebene in zwei - hier jeweils ringförmige - Buchsen-Teile 40a und 40b so unterteilt, dass die beiden Teile 40a, b unter Aufnahme der Achsenden 36 der Drosselklappe 14 zusammenfügbar sind (siehe dazu insbesondere Fig. 19). Dabei ist bevorzugt eine kraft- und/oder formschlüssige Steckverbindung mit axialen Steckansätzen 46 und korrespondierenden Sicht Steköffnungen 48 vorgesehen, die axial ineinandersteckbar sind (Fig. 19). Mit weiterem Vorteil sind die beiden Teile 40a und 40b identisch ausgebildet und nach einer bestimmten relativen Verdrehung um 180° zusammensteckbar. Hierbei können zudem innerhalb der Haltebuchse 40 bzw. der Buchsen-Teile 40 die Anschlagelemente 29 für die Drosselklappe 14 beispielsweise in Form von radialen Ringstegabschnitten angeordnet sein.

In Abweichung von der dargestellten Ausführung gemäß Fig. 16 bis 19 kann die Haltebuchse 40 auch in einer axial verlaufenden Ebene in zwei Buchsen-Halbschalen geteilt sein. Hierbei muß die Teilungsebene nicht unbedingt durch die Lageröffnungen 38 verlaufen.

Durch diese vorteilhafte Ausführung der geteilten Haltebuchse 40 kann die Drosselklappe 14 fest (unlösbar) mit ihrer Achse bzw. ihren Achsenden 36 verbunden sein. Beispielsweise kann ein (nicht dargestellter) Achs-Stift direkt mit einem die Drosselklappe 14 bildenden kunststoffgebundenen Magnet umspritzt werden. Um hierbei einen guten Verbund zu erreichen, kann der Achs-Stift in seinem zu umspritzenden Bereich eine aufgerauhte, insbesondere gerändelte Oberfläche aufweisen.

In einer weiteren, jedoch nicht im Einzelnen dargestellten, vorteilhaften Ausgestaltung kann die Drosselklappe 14 durch die quer verlaufende Achse 16 derart asymmetrisch in einen bezüglich ihrer Flächen größeren und in einen kleineren Klappenabschnitt unterteilt sein, dass in der Öffnungsstellung etwaigen Flatterbewegungen strömungsbedingt entgegengewirkt wird, indem der größere Klappenabschnitt - nach Art einer "Fahne im Wind" - durch die Strömung stabil in Strömungsrichtung ausgerichtet wird.

Wie sich noch aus Fig. 6 ergibt, kann die Verbindungsleitung 6 mit Vorteil als starre, formstabile Rohrleitung aus einem nicht-magnetischen Material ausgebildet sein, die zumindest einendig mit einem Gewindeanschluß 46 (z. B. Außengewindestutzen) ausgestattet sein kann.

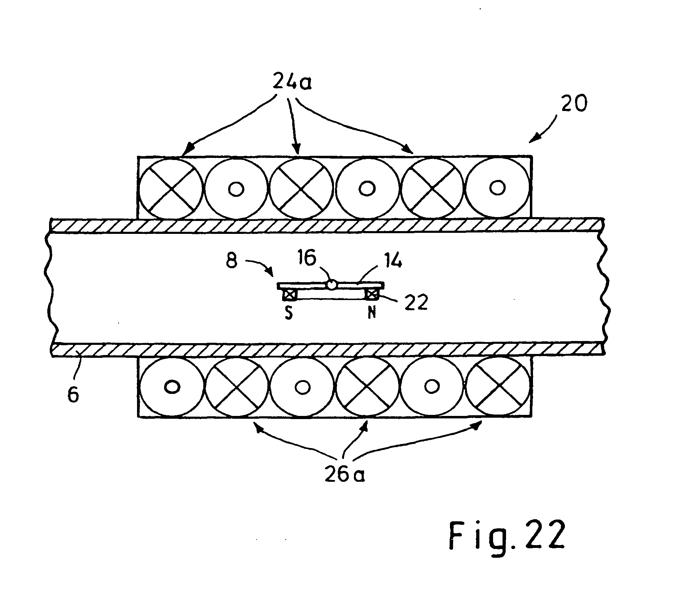

Was schließlich noch die Ausführung gemäß Fig. 20 und 21 sowie gemäß Fig. 22 betrifft, so besteht dabei die Magnetanordnung 20 wiederum aus zwei Magnetelementen 24a und 26a, die aber beide zueinander parallel verlaufende, jedoch entgegengesetzte Polaritäten aufweisende Magnetfelder A, B erzeugen. In den dargestellten Beispielen verlaufen beide Felder A und B längs zur Achse der Verbindungsleitung 6, sie könnten aber auch beide quer verlaufen. Durch die entgegengesetzte Polarisierung können durch unterschiedliche Ansteuerung der Magnetelemente 24a, 26a bezüglich ihres Verlaufes unterschiedliche resultierende Magnetfelder A + B erzeugt werden, um die Drosselklappe 14 entsprechend zum Einstellen verschiedener Stellungen auszurichten. Gemäß Fig. 20 und 21 können die Magnetelemente 24a, 26a axial nebeneinander angeordnet oder gemäß Fig. 22 als Einheit, z. B. als doppelte, aber entgegengesetzt mit Strom zu durchfließende Spule, ausgebildet sein. Zudem können auch parallel entgegengesetzte, längs ausgerichtete Felder mit parallel entgegengesetzten, quer ausgerichteten Feldern im Sinne der Ausführung gemäß Fig. 4 bis 10 kombiniert werden.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen. Entsprechendes gilt auch für den unabhängigen Anspruch 14.

**Patentansprüche**

1. Anbausatz (1) für ein Fahrzeug-Luftfedersystem, bestehend aus einem Zusatz-Luftfedervolumen (2) mit einer an ein Fahrzeug-Haupt-Luftfedervolumen (4) anschließbaren Verbindungsleitung (6) und einer Schalteinrichtung (8) zum wahlweisen Zu- oder Abschalten des Zusatz-Luftfedervolumens (2), **dadurch gekennzeichnet, dass** die Schalteinrichtung (8) im Bereich der Verbindungsleitung (6) derart angeordnet und ausgebildet ist, dass sie den Querschnitt der Verbindungsleitung (6) einerseits in einer Öffnungsstellung nahezu vollständig für eine Durchströmung in beiden Richtungen freigibt und andererseits in einer Sperrstellung bis auf einen bestimmten Restöffnungsquerschnitt derart reduziert, dass unter Ausnutzung des sogenannten Helmholtz-Effektes in einem bestimmten, in der Praxis zu erwartenden Bereich einer Erregerfrequenz des schwingenden Luftvolumens ein Quasi-Verschluss der Verbindungsleitung (6) erreicht wird.

2. Anbausatz nach Anspruch 1,
   **dadurch gekennzeichnet, dass** die Schalteinrichtung (8) von einer in der Verbindungsleitung (6) angeordneten, scheibenförmigen Drosselklappe (14) gebildet ist, die um eine quer zur Verbindungsleitung (6) verlaufende Achse (16) derart drehbar gelagert ist, dass sie mit ihrer Scheibenfläche in der Öffnungsstellung in Längsrichtung der Verbindungsleitung (6) und in der Sperrstellung in Querrichtung ausgerichtet ist, wobei der Restöffnungsquerschnitt in der Sperrstellung durch einen die Drosselklappe (14) umschließenden Umfangsspalt (18) gebildet ist.

3. Anbausatz nach Anspruch 2,
   **dadurch gekennzeichnet, dass** die Drosselklappe (14) mechanisch verbindungs- und berührungslos durch mindestens ein Magnetfeld (A;B) einer außerhalb der Verbindungsleitung (6) angeordneten Magnetanordnung (20) betätigbar ist.

4. Anbausatz nach Anspruch 2 oder 3,
   **dadurch gekennzeichnet, dass** die Drosselklappe (14) über entgegengesetzte Achsenden (36) innerhalb der Verbindungsleitung (6), insbesondere in Lageröffnungen (38) einer in die Verbindungsleitung (6) eingesetzten Haltebuchse (40), gelagert ist.

5. Anbausatz nach Anspruch 4,
   **dadurch gekennzeichnet, dass** die Haltebuchse (40) derart in einer vorzugsweise durch die Lageröffnungen (38) verlaufenden, radialen oder axialen Ebene in zwei Teile (40a, 40b) unterteilt ist, dass die zwei Teile (40a, 40b) unter Aufnahme der Achsenden (36) der Drosselklappe (14) zusammenfügbar sind.

6. Anbausatz nach einem der Ansprüche 3 bis 5,
   **dadurch gekennzeichnet, dass** dieDrosselklappe(14)derart magnetisiert ist, dass sie entsprechend dem Magnetfeld (A;B) der äußeren Magnetanordnung (20) ausrichtbar ist.

7. Anbausatz nach Anspruch 6,
   **dadurch gekennzeichnet, dass** die Drosselklappe (14) ein entsprechend magnetisiertes Magnetelement (22), insbesondere einen Ringmagnet, aufweist.

8. Anbausatz nach Anspruch 6,
   **dadurch gekennzeichnet, dass** die Drosselklappe (14) aus einem entsprechend magnetisierten Material besteht, insbesondere aus einem kunststoffgebundenen Permanentmagnet.

9. Anbausatz nach einem der Ansprüche 3 bis 8,
   **dadurch gekennzeichnet, dass** die äußere Magnetanordnung (20) mindestens ein Magnetelement (24, 26) aufweist, welches elektromagnetisch als elektrisch steuerbare und/oder räumlich bewegbare Magnetspule (28;28a,b) oder als räumlich bewegbarer Permanentmagnet (30) ausgebildet ist.

10. Anbausatz nach einem der Ansprüche 3 bis 9,
    **dadurch gekennzeichnet, dass** dieDrosselklappe(14)eine durch Federkraft (F) bedingte Ruhelage mit mechanischem Endanschlag (29) aufweist, aus der sie durch das Magnetfeld (A und/oder B) der äußeren Magnetanordnung (20) in eine Arbeitslage bringbar ist.

11. Anbausatz nach einem der Ansprüche 3 bis 9,
    **dadurch gekennzeichnet, dass** die Drosselkappe (14) frei um die Achse (16) drehbar ist, wobei die Magnetanordnung (20) zwei Magnetelemente (24, 26) derart aufweist, dass die Drosselklappe (14) durch das Magnetfeld (A) des einen Magnetelementes (24) in die Sperrstellung und durch das Magnetfeld (B) des anderen Magnetelementes (26) in die Öffnungsstellung ausrichtbar ist.

12. Anbausatz nach Anspruch 11,
    **dadurch gekennzeichnet, dass** dieDrosselklappe(14)durch Überlagerung der Magnetfelder (A, B) beider Magnetelemente (24, 26) in beliebige Zwischenstellungen ausrichtbar ist.

13. Anbausatz nach einem der Ansprüche 2 bis 12,
    **dadurch gekennzeichnet, dass** dieDrosselklappe(14)durch die Achse (16) derart asymmetrisch in zwei Klappenabschnitte unterteilt ist, dass in der Öffnungsstellung Flatterbewegungen strömungsbedingt vermieden werden.

14. Verwendung einer Schalteinrichtung (8) mit einer in einer Verbindungsleitung (6) anzuordnenden, zwischen einer Öffnungsstellung und einer Sperrstellung drehbar gelagerten Drosselklappe (14), wobei in der Sperrstellung ein bestimmter Restöffnungsquerschnitt verbleibt, in einem Anbausatz (1) nach einem der Ansprüche 1 bis 13.

15. Verwendung nach Anspruch 14, wobei die Schalteinrichtung (8) eine außerhalb der Verbindungsleitung (6) in der Nähe der Drosselklappe (14) anzuordnende Magnetanordnung (20) zum mechanisch verbindungs- und berührungslosen Betätigen der Drosselklappe (14) aufweist wobei die Drosselklappe (14) zwei- oder mehrpolig magnetisiert ist.

16. Verwendung nach Anspruch 15, wobei die Magnetanordnung (20) mindestens zwei Magnetelemente (24, 26) zum Erzeugen von sich überlagernden Magnetfeldern (A, B) zwecks Ausrichtung der Drosselklappe (14) gemäß einem daraus resultierenden Gesamt-Magnetfeld (A+B) aufweist.

17. Verwendung nach Anspruch 16, wobei ein erstes Magnetelement (24) ein innerhalb der Verbindungsleitung (6) quer verlaufendes Magnetfeld (A) erzeugt und ein zweites Magnetelement (26) ein innerhalb der Verbindungsleitung (6) längs verlaufendes Magnetfeld (B).

18. Verwendung nach Anspruch 16, wobei mindestens zwei Magnetelemente (24a, 26a) zum Erzeugen von parallel verlaufenden, aber entgegengesetzt gepolten Magnetfeldern (A+B) vorgesehen sind.

19. Verwendung nach einem der Ansprüche 15 bis 18, wobei die Magnetanordnung (20) mindestens eine elektrisch ansteuerbare und/oder mechanisch bewegbare Magnetspule (28, 28a,b) und/oder mindestens einen mechanisch bewegbaren Permanentmagnet (30) aufweist.


**Claims**

1. A customising kit (1) for a vehicle air suspension system, comprising an auxiliary air-spring volume (2) with a connecting line (6) which is connectable to a vehicle main air-spring volume (4), and a switching means (8) for the selective connection or disconnection of the auxiliary air-spring volume (2), **characterised in that** the switching means (8) is arranged in the region of the connecting line (6) and formed in such a way that, in an open position, it virtually completely frees the cross-section of the connecting line (6) for flow in both directions and, in a closed position, reduces the cross-section to a specified residual opening cross-section so that quasi closure of the connecting line (6) is achieved by exploiting the so-called Helmholtz effect within a specified range - to be expected in practice - of an exciter frequency of the oscillating air volume.

2. A customising kit according to claim 1, **characterised in that** the switching means (8) is formed by a disc-shaped throttle valve (14) which is arranged in the connecting line (6) and mounted so as to be rotatable about an axis (16) extending transversely to the connecting line (6) so that its disc face is orientated in the longitudinal direction of the connecting line (6) in the open position and in the transverse direction in the closed position, wherein the residual opening cross-section in the closed position is formed by a circumferential gap (18) surrounding the throttle valve (14).

3. A customising kit according to claim 2, **characterised in that** the throttle valve (14) is actuatable in a mechanically connectionless and contactless manner by at least one magnetic field (A; B) of a magnet arrangement (20) arranged outside the connecting line (6).

4. A customising kit according to claim 2 or 3, **characterised in that** the throttle valve (14) is mounted by means of opposing spindle ends (36) inside the connecting line (6), in particular in bearing openings (38) of a retaining sleeve (40) inserted into the connecting line (6).

5. A customising kit according to claim 4, **characterised in that** the retaining sleeve (40) is divided into two parts (40a, 40b) in a radial or axial plane, preferably extending through the bearing openings (38), so that the two parts (40a, 40b) can be joined together to receive the spindle ends (36) of the throttle valve (14).

6. A customising kit according to any one of claims 3 to 5, **characterised in that** the throttle valve (14) is magnetised so that it can be orientated in accordance with the magnetic field (A; B) of the outer magnet arrangement (20).

7. A customising kit according to claim 6, **characterised in that** the throttle valve (14) has a correspondingly magnetised magnet element (22), especially a ring magnet.

8. A customising kit according to claim 6, **characterised in that** the throttle valve (14) comprises a correspondingly magnetised material, especially a plastics-bound permanent magnet.

9. A customising kit according to any one of claims 3 to 8, **characterised in that** the outer magnet arrangement (20) has at least one magnet element (24, 26) which is electromagnetically formed as an electrically controllable and/or spatially movable magnetic coil (28; 28a,b) or is formed as a spatially movable permanent magnet (30).

10. A customising kit according to any one of claims 3 to 9, **characterised in that** the throttle valve (14) has a rest position, determined by spring force (F), with a mechanical end stop (29), from which rest position it is movable into an operative position by the magnetic field (A and/or B) of the outer magnet arrangement (20).

11. A customising kit according to any one of claims 3 to 9, **characterised in that** the throttle valve (14) is freely rotatable about the axis (16), wherein the magnet arrangement (20) has two magnet elements (24, 26) such that the throttle valve (14) is movable into the closed position by the magnetic field (A) of the one magnet element (24) and into the open position by the magnetic field (B) of the other magnet element (26).

12. A customising kit according to claim 11, **characterised in that** the throttle valve (14) is movable into any intermediate position by superimposing the magnetic fields (A, B) of the two magnet elements (24, 26).

13. A customising kit according to any one of claims 2 to 12, **characterised in that** the throttle valve (14) is asymmetrically divided by the axis (16) into two valve portions in such a way that, in the open position, fluttering movements are eliminated by the flow.

14. Use of a switching means (8) with a throttle valve (14) which is to be arranged in a connecting line (6) and is mounted so as to be rotatable between an open position and a closed position, wherein a specified residual opening cross-section remains in the closed position, in a customising kit (1) according to any one of claims 1 to 13.

15. Use according to claim 14, wherein the switching means (8) has a magnet arrangement (20) to be arranged outside the connecting line (6) in the vicinity of the throttle valve (14) for the mechanically connectionless and contactless actuation of the throttle valve (14), wherein the throttle valve (14) is magnetised in a dipolar or multipolar manner.

16. Use according to claim 15, wherein the magnet arrangement (20) has at least two magnet elements (24, 26) for the generation of superimposed magnetic fields (A, B) for the purpose of orientating the throttle valve (14) in accordance with a resulting overall magnetic field (A+B).

17. Use according to claim 16, wherein a first magnet element (24) generates a magnetic field (A) extending transversely within the connecting line (6), and a second magnet element (26) generates a magnetic field (B) extending longitudinally within the connecting line (6).

18. Use according to claim 16, wherein at least two magnet elements (24a, 26a) are provided for the generation of magnetic fields (A+B) which extend in a parallel manner, but are oppositely poled.

19. Use according to any one of claims 15 to 18, wherein the magnet arrangement (20) has at least one electrically controllable and/or mechanically movable magnetic coil (28, 28a,b) and/or at least one mechanically movable permanent magnet (30).

**Revendications**

1. Ensemble rapportable (1) destiné à un système de ressort pneumatique de véhicule, constitué d'une chambre pneumatique de réserve (2) avec un tube de raccordement (6) connectable à une chambre pneumatique principale de véhicule (4) et d'un dispositif de mise en service (8) permettant d'ouvrir ou de fermer le chambre pneumatique de réserve (2),
**caractérisé en ce que** le dispositif de mise en service (8) est agencé dans la zone du tube de raccordement (6) et constitué de telle sorte que d'une part en position d'ouverture, la section du tube de raccordement (6) est presque totalement libérée pour le passage du flux dans les deux sens et que de l'autre, en position de fermeture, elle est réduite jusqu'à une section restant ouverte définie, afin d'obtenir une quasi-fermeture du tube de raccordement (6) dans la plage de fréquence d'amortissement de l'air en oscillation, en exploitant ce que l'on nomme l'effet Helmholtz.

**2.** Ensemble rapportable selon la revendication 1,
**caractérisé en ce que** le dispositif de mise en service (8) est formé d'une vanne papillon (14) en forme de disque, disposée dans le tube de raccordement (6) et agencée de manière rotative autour d'un axe (16) perpendiculaire au tube de raccordement (6) de telle façon que la face de son disque est orientée longitudinalement au tube de raccordement (6) en position d'ouverture et transversalement en position de fermeture, un interstice circonférentiel (18) se formant autour de la vanne papillon (14) en position de fermeture, maintenant une partie de section ouverte.

**3.** Ensemble rapportable selon la revendication 2,
**caractérisé en ce que** la vanne papillon (14) est actionnable mécaniquement sans liaison ni contact, par au moins un champ magnétique (A;B) d'un dispositif magnétique (20) disposé à l'extérieur du tube de raccordement (6).

**4.** Ensemble rapportable selon l'une quelconque des revendications 2 ou 3,
**caractérisé en ce que** la vanne papillon (14) est maintenue par les extrémités opposées de l'axe (36) à l'intérieur du tube de raccordement (6), en particulier dans les ouvertures ménagées dans le palier (38) d'une douille de maintien (40) insérée dans le tube de raccordement (6).

**5.** Ensemble rapportable selon la revendication 4,
**caractérisé en ce que** la douille de maintien (40) est divisée en deux parties (40a, 40b), dans une zone s'étendant de préférence radialement ou axialement à travers les ouvertures ménagées dans le palier (38), de sorte que les deux parties (40a, 40b) peuvent être assemblées, en intégrant les extrémités de l'axe (36) de la vanne papillon (14).

**6.** Ensemble rapportable selon l'une quelconque des revendications 3 à 5,
**caractérisé en ce que** la vanne papillon (14) est magnétisée de manière à permettre son orientation en fonction du champ magnétique (A;B) du dispositif magnétique extérieur (20).

**7.** Ensemble rapportable selon la revendication 6,
**caractérisé en ce que** la vanne papillon (14) présente un élément magnétisé correspondant (22), en particulier un aimant annulaire.

**8.** Ensemble rapportable selon la revendication 6,
**caractérisé en ce que** la vanne papillon (14) est constituée d'un matériau magnétisé correspondant, en particulier d'un aimant permanent fixé à la matière plastique.

**9.** Ensemble rapportable selon l'une quelconque des revendications 3 à 8,
**caractérisé en ce que** le dispositif magnétique extérieur (20) présente au moins un élément magnétique (24, 26) sur le plan électromagnétique est conformé en bobine magnétique (28;28a,b) pouvant être excitée électriquement et/ou déplacée, ou en aimant permanent pouvant être déplacé (30).

**10.** Ensemble rapportable selon l'une quelconque des revendications 3 à 9,
**caractérisé en ce que** la vanne papillon (14) présente une position de repos déterminée par la force du ressort (F) avec butée mécanique (29), à partir de laquelle elle peut être amenée en position de travail, au moyen du champ magnétique (A et/ou B) du dispositif magnétique extérieur (20).

**11.** Ensemble rapportable selon l'une quelconque des revendications 3 à 9,
**caractérisé en ce que** la vanne papillon (14) tourne librement autour de l'axe (16), le dispositif magnétique (20) présentant deux éléments magnétiques (24, 26) de sorte que la vanne papillon (14) est orientable en position de fermeture par le champ magnétique (A) de l'un des éléments magnétiques (24) et en position d'ouverture par le champ magnétique (B) de l'autre élément magnétique (26).

**12.** Ensemble rapportable selon la revendication 11,
**caractérisé en ce que** la vanne papillon (14) est orientable dans deux positions intermédiaires quelconques par superposition des champs magnétiques (A, B) des deux éléments magnétiques (24, 26).

**13.** Ensemble rapportable selon l'une quelconque des revendications 2 à 12,
**caractérisé en ce que** la vanne papillon (14) est divisée en deux segments de vanne asymétriques par l'axe (16), de manière à éviter les mouvements de flottement dus au flux en position d'ouverture.

**14.** Utilisation dans un ensemble rapportable (1) selon l'une quelconque des revendications 1 à 13, d'un dispositif de mise en service (8) avec une vanne papillon (14) devant être disposée dans un tube de raccordement (6) et agencée de manière rotative entre une position d'ouverture et une position de fermeture, une section étant maintenue ouverte en position de fermeture.

15. Utilisation selon la revendication 14, le dispositif de mise en service (8) présentant un dispositif magnétique (20) devant être disposé à l'extérieur du tube de raccordement (6), à proximité de la vanne papillon (14) en vue de l'actionnement mécanique sans liaison ni contact de la vanne papillon (14), la vanne papillon (14) étant dotée d'une magnétisation bipolaire ou multipolaire(14).

16. Utilisation selon la revendication 15, le dispositif magnétique (20) présentant au moins deux éléments magnétiques (24, 26) en vue de générer des champs magnétiques (A, B) se chevauchant afin d'orienter la vanne papillon (14) en fonction du champ magnétique total résultant (A+B).

17. Utilisation selon la revendication 16, un premier élément magnétique (24) génèrant un champ magnétique (A) transversal à l'intérieur du tube de raccordement (6) et un deuxième élément magnétique (26), un champ magnétique (B) longitudinal à l'intérieur du tube de raccordement (6).

18. Utilisation selon la revendication 16, au moins deux éléments magnétiques (24a, 26a) étant prévus pour générer des champs magnétiques (A+B) parallèles, mais à polarisation inverse.

19. Utilisation selon l'une quelconque des revendications 15 à 18, le dispositif magnétique extérieur (20) présentant au moins une bobine magnétique (28, 28a,b) pouvant être excitée électriquement et/ou déplacée mécaniquement et/ou au moins un aimant permanent (30) pouvant être déplacé mécaniquement.

Fig.1

Fig.2

a)

b)

Fig.3

Fig.4

Fig.5

Fig.6

Fig.7

Fig.8

Fig.9

Fig.10

Fig.11

EP 1 457 722 B1

Fig.12

Fig.13

Fig.14

Fig.15

21

Fig.16

Fig.19

Fig.18

Fig.17

Fig.20

Fig.21

Fig. 22